# EUROPÄISCHE PATENTSCHRIFT

(11) **EP 3 390 807 B1**
(45) Veröffentlichungstag und Bekanntmachung des Hinweises auf die Patenterteilung: **24.02.2021**
(21) Anmeldenummer: 16784926.4
(22) Anmeldetag: 24.10.2016
(51) Int. Cl.: F02M 63/00, F02M 59/36

(54) **VENTIL IN EINER HOCHDRUCKPUMPE EINES KRAFTSTOFFEINSPRITZSYSTEMS**
VALVE IN A HIGH-PRESSURE PUMP OF A FUEL INJECTION SYSTEM
SOUPAPE DANS UNE POMPE HAUTE PRESSION D'UN SYSTÈME D'INJECTION DE CARBURANT

(30) Priorität: 17.12.2015 DE 102015225648; 29.03.2016 DE 102016205102
(43) Veröffentlichungstag der Anmeldung: 24.10.2018
(73) Patentinhaber: Robert Bosch GmbH, 70442 Stuttgart (DE)
(72) Erfinder: LANGENBACH, Christian, 71576 Erbstetten (DE); LUCARELLI, Francesco, 70469 Stuttgart (DE)
(86) Internationale Anmeldenummer: PCT/EP2016/075525
(87) Internationale Veröffentlichungsnummer: WO 2017/102144

(56) Entgegenhaltungen:
- EP-A1- 1 477 666
- EP-A2- 1 965 069
- WO-A1-03/062629
- WO-A1-2015/110199
- DE-A1- 19 639 117

## Beschreibung

Die Erfindung betrifft ein Ventil, in einer Hochdruckpumpe eines Kraftstoffeinspritzsystemsmit den Merkmalen des Oberbegriffs des Anspruchs 1.

### Stand der Technik

Ein Ventil in einer Hochdruckpumpe eines Kraftstoffeinspritzsystems ist durch die Schriften EP 1 477 666 A1, WO 2015/110199 A1, WO 03/062629 A1, EP 1 965 069 A2 bekannt. Ferner ist die Hochdruckpumpe mit einem solchen Ventil aus diesen Schriften bekannt.

Das Ventil weist ein Ventilelement auf, das zwischen einer Öffnungs- und einer Schließstellung beweglich ist und welches in Schließrichtung von der Federkraft einer ersten Druckfeder beaufschlagt wird. Das Ventilelement ist über einen Ankerstift zumindest mittelbar mit einem Magnetanker in Kontakt ist. Durch den Magnetanker kann somit eine Betätigungskraft auf das Ventilelement übertragen werden. Die Hochdruckpumpe weist ein Pumpengehäuse mit einem Gehäuseteil auf, in dem in einer Zylinderbohrung ein Pumpenkolben hubbeweglich angebracht ist, der in der Zylinderbohrung einen Pumpenarbeitsraum begrenzt. Der Pumpenarbeitsraum ist über das Ventil mit einem Kraftstoffzulauf verbindbar und über ein Rückschlagventil mit einem Hochdruckspeicher verbindbar. Der Magnetanker und ein Polkern sind Teil eines elektromagnetischen Aktors, der außerdem eine Magnetspule umfasst. Bei Bestromung der Magnetspule bildet sich ein Magnetfeld aus wodurch sich der Magnetanker relativ zur Magnetspule gegen eine Federkraft einer zweiten Druckfeder bewegt um einen Arbeitsluftspalt zwischen dem Magnetanker und dem Polkern zu schließen.

Die aus der WO 2015/110199 Albekannte Hochdruckpumpe eines Kraftstoffeinspritzsystems mit Ventil, bei der alle vorangehend beschriebenen Elemente mit Kraftstoff umgeben sind, weist gewisse Nachteile auf. Auch die aus den Schriften EP 1 477 666 A1, WO 03/062629 A1, EP 1 965 069 A2 bekannten Ventile in einer Hochdruckpumpe eines Kraftstoffeinspritzsystems weisen gewissen Nachteile auf. Beim Schließen des Arbeitsluftspalts kann der Magnetanker gegen den Polkern schlagen. Die hierbei entstehende Impulskraft wird über Bauteile, die mit dem Pumpengehäuse verbunden sind, auf das Pumpengehäuse übertragen, in das das Ventil eingesetzt ist. Der Magnetanker und der Polkern bestehen aus Materialien, die zwar gute magnetische Eigenschaften aufweisen, die jedoch dagegen keine hohe Festigkeit aufweisen. Da die Impulskraft hohe Werte annehmen beim zusammenstoßen des Magnetankers und Polkerns aufweisen kann, kann dies über die Lebensdauer zu einem Versagen der Bauteilverbindungen und/oder Dichtungen führen. Die Folge können Undichtigkeiten und/oder Funktionsverlust des Ventils sein.

### Offenbarung der Erfindung

### Vorteile der Erfindung

Das erfindungsgemäße Ventil und die erfindungsgemäße Pumpe mit den Merkmalen des unabhängigen Anspruchs haben dem Stand der Technik gegenüber den Vorteil, dass der Polkern-Einsatz auf der dem Magnetanker zugewandten Seite über einen zweiten Bund verfügt, der aus der dem Magnetanker zugewandten Oberfläche des Polkerns in axialer Richtung herausragt und der einen zweiten vergrößerten Außendurchmesser im Vergleich zum Außendurchmesser des Polkern-Einsatzes in dessen restlichen Bereich aufweist. Dadurch ist es möglich, dass magnetische Klebekräfte zwischen dem Polkern und dem Magnetanker vermieden werden. Zusätzlich müssen möglicherweise notwendige Oberflächentoleranzen im Anlagebereich nicht in das relativ komplexe Bauteile Polkern eingearbeitet werden mittels Oberflächenbehandlung, sondern dies kann in das Bauteil Polkern-Einsatz verlagert werden, was wiederum die Bearbeitungszeit und die Bearbeitungskosten reduziert. Weiterhin werden mögliche Schäden durch einen weiteren Bearbeitungsschritt am Bauteil Polkern vermieden, der aufgrund seines relativ weichen magnetischen Materials anfälliger hierfür ist. Auf diese Weise wird eine Schädigung der Bauteile Magnetanker und Polkern weitestgehend vermieden und die Verschleißbeständigkeit des erfindungsgemäßen Ventils und somit der gesamten erfindungsgemäßen Pumpe erhöht. Ein weiterer Vorteil der erfindungsgemäßen Ausprägung des Ventils ist es, dass mögliche auftretende magnetische Klebekräfte zwischen dem Polkern und dem Magnetanker vermieden werden und somit die Zuverlässigkeit der Pumpe im Dauerbetrieb erhöht wird.

Weiterhin ist auf diese Weise möglich, die Magnetkraft der beiden Bauteile Polkern und Magnetanker durch eine bestmögliche Ausgestaltung der jeweiligen Oberflächenform und der jeweiligen Oberflächengröße zu optimieren. Hierdurch sind Energieeinsparungen beim Betreiben der Pumpe möglich, da die zu bewegenden Masse des Bauteils Magnetanker reduziert werden kann, was wieder zu einer Kostenersparnis führt.

Des Weiteren besteht ein weiterer Vorteil der erfindungsgemäßen Ausgestaltung des Ventils gegenüber dem Stand der Technik darin, magnetische Klebekräfte zwischen dem Polkern und dem Magnetanker zu vermeiden und somit die Zuverlässigkeit des Ventils und der Pumpe im Dauereinsatz zu erhöhen.

Außerdem besteht ein weiterer Vorteil darin, dass der Magnetanker-Einsatz so ausgeführt ist, dass der Magnetanker-Einsatz zum einen auf der dem Polkern zugewandten Seite aus der Aussparung des Magentankers herausragt und auf der dem Polkern abgewandten Seite des Magnetankers über dessen Oberfläche auf dieser Seite herausragt, und insbesondere mit dem Ventilelement auf dieser Seite in Kontakt steht. Dadurch lässt sich die Komplexität des Ventils und der Pumpe reduzieren, da aufgrund der konstruktiven Ausformung des Magnetanker-Einsatzes das Bauteil Ankerbolzen komplett obsolet wird und somit eine Vereinfachung stattfindet. Zudem ragt der Magnetanker-Einsatz über die Oberfläche des Magnetankers auf der dem Ventilelement zugewandten Seite heraus. Dadurch werden Bearbeitungs- und Montageschritte reduziert und somit die Produktkosten reduziert. Weiterhin vorteilhaft ist es zudem, dass ein direkter Kontakt des Magnetankers zum Ventilelement durch die konstruktive Ausformung des Bauteils Magnetanker-Einsatz verhindert wird, was die Möglichkeit eines Bauteilversagen des Magnetankers reduziert und dadurch die Zuverlässigkeit des Ventils und der gesamten Pumpe erhöht.

Überdies ist es vorteilhaft, dass sich der erste Bund des Magnetanker-Einsatzes auf einer Schulter des Magnetankers - die sich umlaufend am Innendurchmesser des Magnetankers ausbildet und die im Folgenden als erste Schulter bezeichnet wird - in axialer Richtung abstützt. Durch diese erfindungsgemäße Ausprägung des Ventils kann verhindert werden, dass sich das Bauteil Magnetanker-Einsatz in die erste Aussparung des Magnetankers, insbesondere bei einem Dauerbetrieb der Pumpe, hinbewegt, was zu einem Ausfall der Pumpe führen würde. Dadurch lässt sich die Zuverlässigkeit des Ventils und der gesamten Pumpe erhöhen.

Des Weiteren ist es vorteilhaft, dass sich der zweite Bund des Polkern-Einsatzes auf einer zweiten Schulter des Polkerns - die sich umlaufend am Innendurchmesser des Polkerns ausbildet - in axialer Richtung abstützt. Durch diese erfindungsgemäße Ausprägung des Ventils kann verhindert werden, dass sich das Bauteil Polkern-Einsatz in die zweite Aussparung des Polkerns, insbesondere bei einem Dauerbetrieb der Pumpe, hinbewegt, was zu einem Ausfall der Pumpe führen würde. Dadurch lässt sich die Zuverlässigkeit des Ventils und der gesamten Pumpe erhöhen.

Zusätzlich ist es von Vorteil, dass der Magnetanker-Einsatz und/oder der Polkern-Einsatz aus einem Material bestehen, das eine höhere Festigkeit als das Material des Magnetankers oder des Polkerns aufweist. Durch die erfindungsgemäße Ausprägung kann eine Schädigung durch einen Berührungs-Impuls der Bauteile Magnetanker und Polkern verhindert werden, was zu einer Erhöhung der Lebensdauer der Pumpe führt. Weiterhin kann eine Verminderung des Aufprallimpulses und somit des Schädigungsimpulses erzielt werden, indem man für den Magnetanker-Einsatz und/oder der Polkern-Einsatz dämpfende Materialien auswählt. Zusätzlich kann durch diese Verwendung von unterschiedlichen Materialien eine Erhöhung der Bauteilsteifigkeit erzielt werden, jeweils von der Kombination Magnetanker und Magnetanker-Einsatz und/oder Polkern und Polkern-Einsatz.

Zudem ist es vorteilhaft, dass das Material des Magnetanker-Einsatzes und/oder das Material des Polkern-Einsatzes nicht magnetisch ist. Zum einen lassen sich hierdurch die magnetischen Klebekräfte zwischen den Bauteilen Magnetanker und Polkern vermeiden, die einen negativen Einfluss auf die Zuverlässigkeit der Pumpe haben können. Weiterhin kann eine Gewichtsreduzierung der Bauteilkombinationen erzielt werden, was zum einen die schädigende Impulsenergie beim Kontakt vermindert und zum anderen zu einer Energieeinsparung beim Betreiben der Pumpe führt.

Außerdem ist es von Vorteil, dass die zweite Druckfeder in eine dritte Aussparung des Magnetanker-Einsatzes und/oder in eine vierte Aussparung des Polkern-Einsatzes hereinragt, und insbesondere in radialer und/oder axialer Richtung geführt wird, wobei diese zweite Druckfeder zwischen dem Magnetanker und dem Polkern angeordnet ist. Diese zweite Druckfeder übt eine axiale und voneinander wegbewegende Kraft auf den Magnetanker und den Polkern aus. Hierdurch lässt sich eine Schädigung der zweiten Druckfeder reduzieren, beispielsweise durch Verkippung, und somit die Lebensdauer der gesamten Pumpe steigern.

Des Weiteren können weitere Ausführungsformen des harten Polkern-Einsatzes und des harten Magnetanker-Einsatzes so ausgeführt sein, dass sie nicht über einen zweifach gestuften Verlauf verfügen, sondern nur über eine einfache Stufe, die dann wiederum entweder mit dem Polkern oder mit dem Magentanker in Anlage steht. Dadurch wird die Fertigung der Bauteile Polkern, Polkern-Einsatz und Magnetanker und Magnetanker-Einsatz vereinfacht, da man keine unbestimmten Toleranzlagen aufgrund der zweifachen Stufung beachten muss.

### Zeichnung

Eine oder mehrere Varianten der Erfindung ist/sind in der Zeichnung dargestellt und in der nachfolgenden Beschreibung näher erläutert. Es zeigen:
- Figur 1: eine Pumpe in einem Längsschnitt,
- Figur 2: einen in Figur 1 mit II bezeichneten Ausschnitt der Pumpe in vergrößerter Darstellung mit einem Saugventil,
- Figur 3: einen in Figur 2 mit III bezeichneten Ausschnitt des Saugventils in vergrößerter Darstellung gemäß einem ersten Ausführungsbeispiel,
- Figur 4: einen Schnitt eines Magnetankers mit einem Magnetanker-Einsatz gemäß einem zweiten Ausführungsbeispiel,
- Figur 5: einen Schnitt des Magnetankers mit dem Magnetanker-Einsatz gemäß einem dritten Ausführungsbeispiel,
- Figur 6: einen Schnitt eines Polkerns mit einem Polkern-Einsatz gemäß einem vierten Ausführungsbeispiel,
- Figur 7: einen Schnitt des Polkerns mit dem Polkern-Einsatz gemäß einem fünften Ausführungsbeispiel.

### Beschreibung der Ausführungsbeispiele

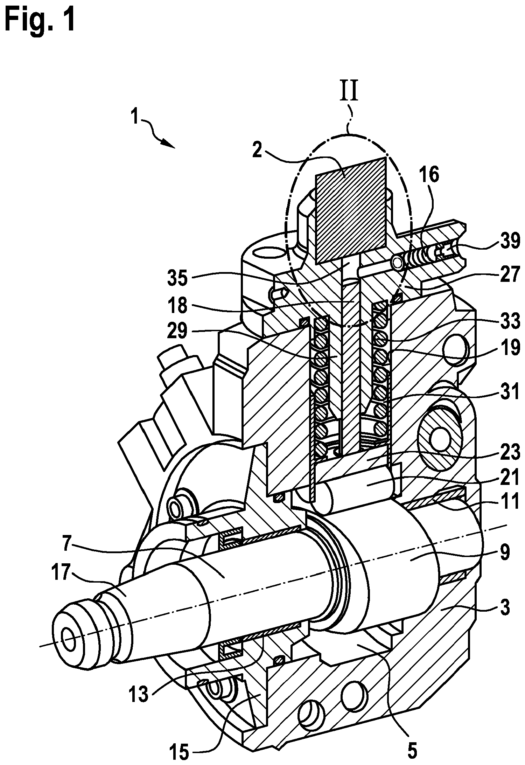

**Fig.** 1 zeigt eine Schnittdarstellung einer schematisch dargestellten Hochdruckpumpe **1,** die als Kraftstoffhochdruckpumpe ausgebildet ist und vorzugsweise bei einem Common-Rail-Einspritzsystem verbaut ist. Mittels der Hochdruckpumpe **1** wird von einem Kraftstoffniederdrucksystem, das zumindest einen Tank, einen Filter und eine Niederdruckpumpe aufweist, bereitgestellter Kraftstoff in einen Hochdruckspeicher gefördert, aus dem der dort gespeicherte Kraftstoff von Kraftstoffinjektoren zur Einspritzung in zugeordnete Brennräume einer Brennkraftmaschine entnommen wird. Die Zubringung des Kraftstoffes zu einem Pumpenarbeitsraum **35** erfolgt über ein elektro-magnetisch ansteuerbares Saugventil **2,** wobei das elektromagnetisch ansteuerbare Saugventil, welches nachfolgend noch erläutert wird, an der Hochdruckpumpe **1** verbaut ist.

Die Hochdruckpumpe **1** weist ein Pumpengehäuse **3** mit einem Nockenwellenraum **5** auf. In den Nockenwellenraum **5** ragt eine Nockenwelle **7** mit einem beispielsweise als Doppelnocken ausgebildeten Nocken **9** hinein. Die Nockenwelle **7** ist in zwei beidseits des Nockens **9** angeordnete und als Radiallager ausgebildeten Lagern in Form eines in dem Pumpengehäuse **3** angeordneten Gehäuselagers **11** und eines Flanschlagers **13,** das in einem mit dem Pumpengehäuse **3** verbundenen Flansch **15,** der den Nockenwellenraum **5** zur Umgebung hin dicht abschließt, gelagert. Der Flansch **15** weist eine durchgehende Öffnung auf, durch die ein antriebsseitiger Endabschnitt **17** der Nockenwelle **7** hindurch ragt. Der antriebsseitige Endabschnitt **17** weist beispielsweise eine Konus auf, auf den ein Antriebsrad aufgesetzt und gesichert ist. Das Antriebsrad ist beispielsweise als Riemenrad oder Zahnrad ausgebildet. Das Antriebsrad wird von der Brennkraftmaschine direkt oder indirekt beispielsweise über einen Riementrieb oder ein Zahnradgetriebe angetrieben.

In das Pumpengehäuse **3** ist weiterhin eine Stößelführung **19** eingelassen, in die ein eine Laufrolle **21** aufweisender Rollenstößel **23** eingesetzt ist. Die Laufrolle **21** läuft auf dem Nocken **9** der Nockenwelle **7** bei einer Drehbewegung derselben ab und der Rollenstößel **23** wird somit in der Stößelführung **19** translatorisch auf und ab bewegt. Dabei wirkt der Rollenstößel **23** mit einem Pumpenkolben **18** zusammen, der in einer in einem Pumpenzylinderkopf **27** ausgebildeten Zylinderbohrung **29** ebenfalls translatorisch auf und ab bewegbar angeordnet ist.

In einem von der Stößelführung **19** und der Pumpenbohrung **29** gebildeten Stößelfederraum **31** ist eine Stößelfeder **33** angeordnet, die sich einerseits an dem Pumpenzylinderkopf **27** und andererseits an dem Rollenstößel **23** abstützt und eine dauerhafte Anlage der Laufrolle **21** auf dem Nocken **9** in Richtung der Nockenwelle **7** sicherstellt. In dem Pumpenzylinderkopf **27** ist in Verlängerung des Pumpenkolbens **18** der Pumpenarbeitsraum **35** gebildet, in den über das elektromagnetisch ansteuerbare Saugventil **2** Kraftstoff eingebracht wird. Die Einbringung des Kraftstoffs erfolgt bei einer Abwärtsbewegung des Pumpenkolbens **18,** während bei einer Aufwärtsbewegung des Pumpenkolbens **18** in dem Pumpenarbeitsraum **35** befindlicher Kraftstoff über einen Hochdruckauslass **39** mit einem eingesetzten Auslassventil **16** über eine weiterführende Hochdruckleitung in den Hochdruckspeicher gefördert wird. Die Hochdruckpumpe **1** ist insgesamt kraftstoffgeschmiert, wobei der Kraftstoff von dem Niederdrucksystem in den Nockenwellenraum **5** gefördert wird, der mit dem Saugventil **2** strömungsverbunden ist. Dieses elektro-magnetisches ansteuerbare Saugventil **2** und dessen Funktionalität wird im Folgenden beschrieben.

Im Saugbetrieb der Hochdruckpumpe **1** ist das elektro-magnetisch ansteuerbare Saugventil **2** geöffnet und eine Verbindung des Pumpenarbeitsraums **35** mit einem Kraftstoffzulauf **26** hergestellt, so dass dem Pumpenarbeitsraum **35** über das Saugventil **2** Kraftstoff zugeführt wird. Im Förderbetrieb der Hochdruckpumpe **1** wird der dem Pumpenarbeitsraum **35** zugeführte Kraftstoff verdichtet und über das in dem Hochdruckauslass **39** angeordnete Hochdruckventil **16** einem Hochdruckspeicher (nicht dargestellt) zugeführt. Im Verdichtungsbetrieb der Hochdruckpumpe **1,** bei dem sich der Pumpenkolben **18** aufwärts bewegt, ist das Saugventil **2** geschlossen, wenn eine Kraftstoffförderung erfolgen soll, und dichtet den Pumpenarbeitsraum **35** gegenüber dem Kraftstoffzulauf **26** ab.

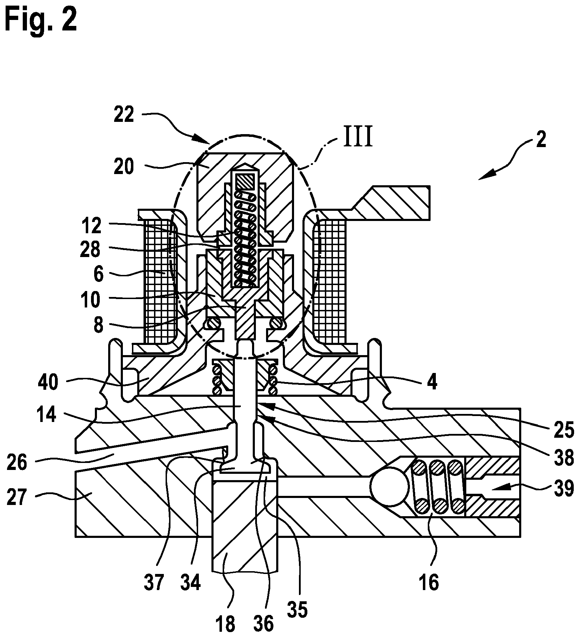

**In** **Fig.** 2 werden die Elemente eines elektromagnetischen Aktors **22** dargestellt. Das in **Fig.** 2 dargestellte, an die Hochdruckpumpe **1** angebaute elektromagnetisch ansteuerbare Saugventil **2,** weist ein kolbenförmiges Ventilelement **14** auf, welches in Schließrichtung von einer Federkraft einer ersten Druckfeder **4** beaufschlagt wird. Zudem weist der Pumpenzylinderkopf **27** im Kontakbereich zu einem Kopf **34** des Ventilelements **14** einen Ventilsitz **36** auf. Das kolbenförmige Ventilelement **14** ist über einen Schaft **25** in einer Bohrung **38** in dem Pumpenzylinderkopf **27** geführt und weist den im Durchmesser gegenüber dem Schaft **25** vergrößerten Kopf **34** auf. An diesem vergrößerten Kopf **34** des Ventilelements **14** ist eine Dichtfläche **37** ausgebildet, die in Schließstellung des Ventilelements **14** an dem Ventilsitz **36** im Pumpenzylinderkopf **27** zur Anlage kommt. Dadurch ist der Pumpenarbeitsraum **35** vom Kraftstoffzulauf **26** getrennt und es kann kein Kraftstoff zurückströmen.
Das Ventilelement **14** steht über einen Magnetanker-Einsatz **8** als weiteres Element in Kontakt mit einem Magnetanker **10,** wobei beide Elemente in axialer Richtung nicht miteinander verbunden sind, sondern nur durch magnetische Kräfte und Federkräfte in Anlage miteinander gehalten werden. Des weiteren ist in **Fig.** 2 ein Trägerelement **40** dargestellt.
In axialer Richtung wirkt eine zweite Druckfeder **12** über den Magnetanker-Einsatz **8** auf den Magnetanker **10.** Die zweite Druckfeder **12** sorgt in unbestromten Zustand einer Magnetspule **6** dafür, dass der Magnetanker-Einsatz **8** auf das Ventilelement **14** wirkt und es in geöffneter Position hält. Dem wirkt zwar die erste Druckfeder **4** entgegen, da jedoch die zweite Druckfeder **12** eine höhere Federkraft besitzt wird das Ventilelement **14** in geöffnetem Zustand gehalten. Durch eine Bestromung des Magnetankers **10** mittels der Magnetspule **6** bewegt sich der Magnetanker **10** gegen die Kraft der zweite Druckfeder **12** vom Ventilelement **14** weg, um einen Arbeitsluftspalt **28** zu schließen, der sich zwischen dem Magnetanker **10** und einem Polkern **20** befindet. Durch das Wegbewegen verliert der Ankerbolzen **8** den kraftschlüssigen Kontakt zum Ventilelement **14** wodurch sich das Ventilelement **14** durch die Kraft der ersten Druckfeder **4** in Richtung geschlossener Zustand bewegen kann. In vollständig geschlossenem Zustand des Ventilelements **14** liegt dieses mit der Dichtfläche **37** am Ventilsitz **36** an und dichtet den Pumpenarbeitsraum **35** gegenüber dem Kraftstoffzulauf **26** ab.

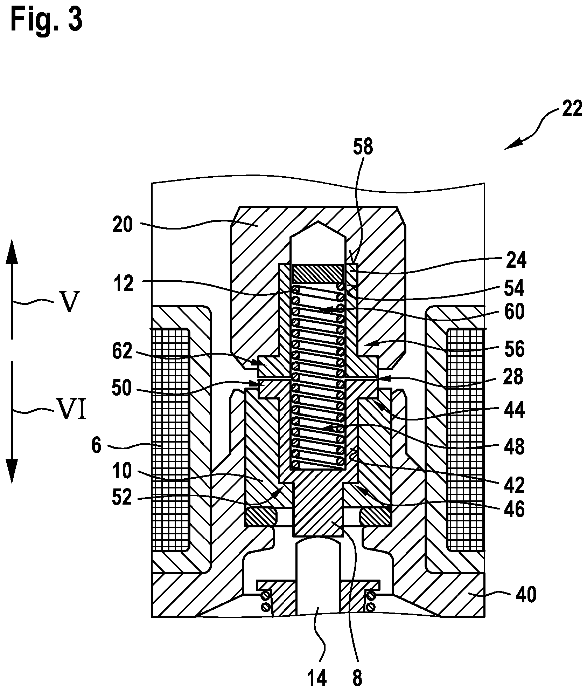

Anhand der **Fig.** 3 bis 7 werden nachfolgend mehrere Ausführungsbeispiele des Magnetankers **10** mit dessen Magnetanker-Einsatz **8** und des Polkerns **20** mit dessen Polkern-Einsatz **24** erläutert.

In **Fig.** 3 wird ein Schnitt des Magnetankers **10** gemäß einem ersten Ausführungsbeispiel dargestellt, wobei der Magnetanker **10** eine erste Aussparung **42** aufweist, wobei die erste Aussparung **42** einen gestuften Verlauf aufweist und eine erste Schulter **44** und eine zweite Schulter **46** ausbildet. Die erste Schulter **44** und die zweite Schulter **46** befinden sich hierbei im Bereich der Innenkontur des Magnetankers **10** die durch die erste Aussparung **42** ausgebildet wird. Die erste Schulter **44** befindet sich hierbei auf der dem Polkern **20** zugewandten Seite des Magnetankers **20.** Des weiteren befindet sich die zweite Schulter **46** auf der dem Polkern **20** abgewandten Seite des Magnetankers **10.**
Als weiteres Element wird der Schnitt des Magnetanker-Einsatzes **8** gemäß dem ersten Ausführungsbeispiel dargestellt, bei dem der Magnetanker-Einsatz **8** eine zweite Aussparung **48** einen ersten Bund **50** und einen ersten Absatz **52** aufweist.
Des weiteren ist eine Einschieberichtung (VI) dargestellt, in die der Magnetanker-Einsatz **8** in den Magnetanker **10** eingeschoben wird. Der erste Bund **50** des Magnetanker-Einsatzes **8** befindet sich auf der der Einschieberichtung (VI) gegenüberliegenden Seite des Magnetanker-Einsatzes **8.** Der erste Absatz **52** des Magnetanker-Einsatzes befindet sich auf der in Einschieberichtung (VI) weisenden Seite des Magnetanker-Einsatzes **8.**
Insbesondere wird hier der Magnetanker-Einsatz **8** so in der Einschieberichtung (VI) entlang der Längsachse in den Magnetanker eingeführt, dass der erste Bund **50** mit der ersten Schulter **44** des Magnetankers **10** in Anlage kommt und der erste Absatz **52** mit der zweiten Schulter **46** des Magnetankers **10** in Anlage kommt. Somit wird ein zu tiefes Einschieben des Polkern-Einsatzes **24** in die erste Aussparung **42** des Magnetankers **10** verhindert.

**Fig.** 3 zeigt unter anderem die Elemente Polkern **20,** Polkern-Einsatz **24,** Magnetanker **10** und den Magnetanker-Einsatz **8,** gemäß dem ersten Ausführungsbeispiel.
Insbesondere wird ein Schnitt des Polkerns **20** dargestellt, wobei der Polkern **20** eine zylindrische Außenkontur und eine dritte Aussparung **54** aufweist, wobei die dritte Aussparung **54** einen mehrfach gestuften Verlauf aufweist und eine dritte Schulter **56** und eine vierte Schulter **58** ausbildet. Die dritte Schulter **56** und die vierte Schulter **58** befinden sich hierbei im Bereich der Innenkontur des Polkerns **20** die durch die dritte Aussparung **54** ausgebildet wird und somit innerhalb des Polkerns **20** liegt. Die dritte Schulter **56** befindet sich hierbei auf der dem Magnetanker **10** zugewandten Seite des Polkerns **20.** Des weiteren befindet sich die vierte Schulter **58** auf der dem Magnetanker **10** abgewandten Seite des Polkerns **20..** Des weiteren wird ein Schnitt des Polkern-Einsatzes **24** gemäß dem ersten Ausführungsbeispiel dargestellt, wobei der Polkern-Einsatz **24** eine vierte Aussparung **60** und einen zweiten Bund **62** aufweist.
Des weiteren ist eine Einschieberichtung (V) dargestellt, in die der Polkern-Einsatz **24** in den Polkern **20** eingeschoben wird. Der zweite Bund **62** des Polkern-Einsatzes **24** befindet sich auf der der Einschieberichtung (V) entgegengesetzten Seite des Polkern-Einsatzes **24.** Dabei wird der Polkern-Einsatz **24** so in der Einschieberichtung (V) entlang der Längsache in die dritte Aussparung **54** des Polkerns **20** eingeschoben und stützt sich mit dem zweiten Bund **62** an der dritten Schulter **56** des Polkerns **20** in Richtung der Längsachse ab. Durch den zweiten Bund **62** des Polkern-Einsatzes **24,** die sich an der dritten Schulter **56** des Polkerns **20** abstützt, wird ein tiefes Einschieben des Polkern-Einsatzes **24** in die dritte Aussparung **54** des Polkerns **20** verhindert.

Die Einsätze **8, 24** stehen direkt im Bereich Ihres jeweiligen Bundes **50, 62** miteinander in axialer Richtung in Anlage. Dadurch wird verhindert, dass der Magentanker **10** und der Polkern **20** direkt miteinander in Berührung kommen. Dies ist dadurch begründet, dass der Magnetanker-Einsatz **8** und/oder der Polkern-Einsatz **24** aus einem Material bestehen, das eine höhere Festigkeit als das Material des Magnetankers **10** und/oder des Polkerns **20** aufweist. Das Material des Magnetankers **10** und/oder das Material des Polkerns **20** vornehmlich aufgrund der guten magnetischen Eigenschaften ausgewählt wird. Durch diese Maßnahme wird eine Schädigung der Bauteile Magnetanker **10** und Polkern **20** weitestgehend vermieden, da eine Trennung der magnetischen und mechanischen Kräfte durch die Verwendung der Einsätze **8, 24** erfolgt.

Des weiteren zeigt der in **Fig.** 3 dargestellte Auschnitt III im Detail, dass die zweite Druckfeder **12** jeweils in die zweite Aussparung **48** des Magnetanker-Einsatzes **8** und in die vierte Aussparung **60** des Polkerns-Einsatzes **24** hineinragt. Der Magnetanker **10** wird zudem hubbeweglich in dem Trägerelement **40** axial geführt. In radialer Richtung umgibt den Magnetanker **10** die Magnetspule **6,** die bei Bestromung ein Magnetfeld ausbildet und somit eine magnetische Kraft auf den Magnetanker **10** ausüben kann.
Das Ventilelement **14** steht über den Magnetanker-Einsatz **8** in Kontakt mit dem Magnetanker **10,** wobei beide Elemente in axialer Richtung nicht miteinander verbunden sind, sondern nur durch magnetische Kräfte und Federkräfte in Anlage miteinander gehalten werden.

Der Magnetanker-Einsatz **8** kann jedoch auch so ausgeführt sein, dass er nur von der dem Polkern **20** zugewandten Seite aus dem Magnetanker **10** herausragt und somit nur teilweise in die erste Aussparung hineinragt. In diesem Fall kann ein Ankerbolzen von der dem Ventilelement **14** zugewandten Seite in den Magnetanker **10** eingefügt, beispielsweise eingepresst sein, um mit dem Ventilelement **14** in Anlage zu stehen. Weiterhin verhindert dieser eingepresste Ankerbolzen, dass ein direkter Kontakt zwischen dem Ventilelement **14** und dem Magnetanker **10** hergestellt wird, da dies zu einer Schädigung des relativ weichen magnetischen Materials des Magnetankers **10** führen könnte.

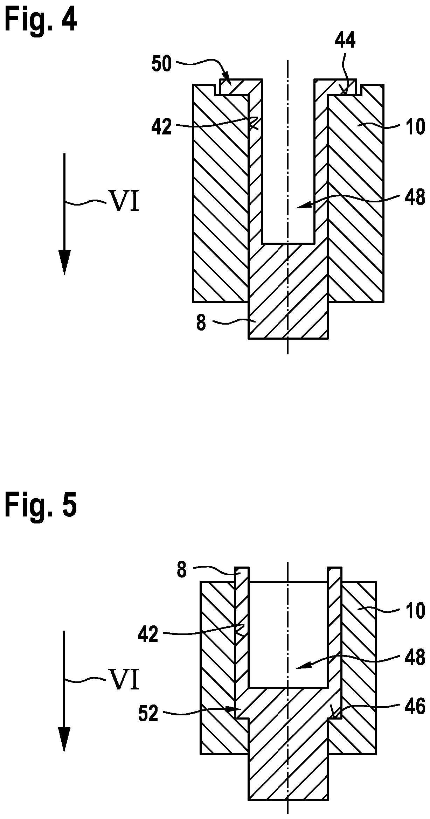

**Fig.** 4 zeigt den Schnitt eines zweiten Ausführungsbeispiels des Magnetanker-Einsatzes **8** mit dem Magnetanker **10.** Beim zweiten Ausführungsbeispiel wird der Magnetanker-Einsatz **8** in die erste Aussparung **42** des Magnetankers **10** eingeführt, so dass der erste Bund **50** des Magnetanker-Einsatz **8** mit der ersten Schulter **50** des Magnetankers **10** in Anlage kommt, und somit ein zu tiefes Einschieben des Magnetanker-Einsatzes **8** in die erste Aussparung **42** des Magnetankers **10** verhindert wird. Die erste Aussparung **42** des Magnetankers **10** gemäß dem zweiten Ausführungsbeispiel ist abweichend zum ersten Ausführungsbeispiel nur einfach gestuft ausgebildet und weist nur die erste Schulter **44** auf aber nicht die zweite Schulter **46.** Der Magnetanker **10** ist zum Ventilelement **14** hin offen ausgebildet und der Magnetankereinsatz **8** ist in Anlage am Ventilelement **14.** Ein Teil des Magnetanker-Einsatzes kann auf der dem Ventilelement **14** zugewandten Seite aus dem Magnetanker **10** herausragen, um mit dem Ventilelement **14** in Anlage zu stehen. Alternativ kann das Ventilelement **14** auch in den Magnetanker **10** hineinragen und in Anlage am Magnetankereinsatz **8** sein, so dass der Magnetankereinsatz **8** nicht aus dem Magnetanker **10** herausragt

In **Fig.** 5 wird der Schnitt eines dritten Ausführungsbeispiels des Magnetanker-Einsatzes **8** mit dem Magnetanker **10** dargestellt. Beim dritten Ausführungsbeispiel wird der Magnetanker-Einsatz **8** in die erste Aussparung **42** des Magnetankers **10** eingeführt, so dass der erste Absatz **52** des Magnetanker-Einsatz **8** mit der zweite Schulter **46** des Magnetankers **10** in Anlage kommt, und somit ein zu tiefes Einschieben des Magnetanker-Einsatzes **8** in die erste Aussparung **42** des Magnetankers **10** verhindert wird. Der Magnetanker **10** ist zum Ventilelement **14** hin offen ausgebildet und der Magnetankereinsatz **8** ist in Anlage am Ventilelement **14.** Ein Teil des Magnetanker-Einsatzes kann auf der dem Ventilelement **14** zugewandten Seite aus dem Magnetanker **10** herausragen, um mit dem Ventilelement **14** in Anlage zu stehen.
Die erste Aussparung **42** des Magnetankers **10** gemäß dem dritten Ausführungsbeispiels ist abweichend zum dritten Ausführungsbeispiel nur einfach gestuft ausgebildet und weist nur die zweite Schulter **46** auf, aber nicht die erste Schulter **44.** Am Magnetanker-Einsatz **8** kann beim dritten Ausführungsbeispiel der erste Bund **50** entfallen.

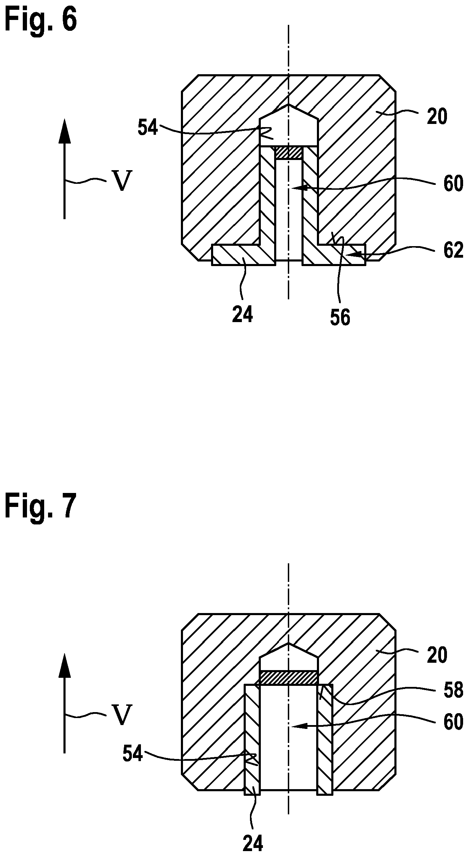

Der in **Fig.** 6 dargestellte Schnitt zeigt ein viertes Ausführungsbeispiel des Polkern-Einsatzes **24** mit dem Polkern **20.** Beim vierten Ausführungsbeispiel wird der Polkern-Einsatz **24** so in die dritte Aussparung **54 des** Polkerns **20** eingeführt, dass der zweite Bund **62** des Polkern-Einsatzes **24** mit der dritten Schulter **56** des Polkerns **20** in Anlage kommt, und somit ein zu tiefes Einschieben des Polkern-Einsatzes **24** in die dritte Aussparung **54** des Polkerns **20** verhindert wird. Die dritte Aussparung **54** des Polkerns **20** ist beim vierten Ausführungsbeispiel abweichend zum vierten Ausführungsbeispiel nur einfach gestuft ausgebildet und weist nur die dritte Schulter **56** auf, aber nicht die vierte Schulter **58.**

In **Fig.** 7 wird der Schnitt eines fünften Ausführungsbeispiels des Polkern-Einsatzes **24** mit dem Polkern **20** dargestellt. Beim fünften Ausführungsbeispiel wird der Polkern-Einsatz **24** in die dritte Aussparung **54** des Polkerns **20** eingeführt, so dass der Polkern-Einsatz **24** mit der vierten Schulter **58** des Polkerns **20** in Anlage kommt, und somit ein zu tiefes Einschieben des Polkern-Einsatzes **24** in die dritte Aussparung **54** des Polkerns **20** verhindert wird. Die dritte Aussparung **54** des Polkerns **20** ist beim fünften Ausführungsbeispiel abweichend zum ersten Ausführungsbeispiel nur einfach gestuft ausgebildet und weist nur die vierte Schulter **58** auf, aber nicht die dritte Schulter **56.** Am Polkern-Einsatz **24** gemäß dem fünften Ausführungsbeispiel kann der beim ersten Ausführungsbeispiel vorgesehene zweite Bund 62 am Polkern Einsatz **24** entfallen.

Die vorstehend erläuterten Ausführungsbeispiele des Magnetankers **10** mit dessen Magnetanker-Einsatz **8** sowie des Polkerns **20** mit dessen Polkern-Einsatz **24** können in beliebiger Weise miteinander kombiniert werden.

## Patentansprüche

1. Ventil in einer Hochdruckpumpe (1) eines Kraftstoffeinspritzsystems, das einen Magnetaktor (22) aufweist, der eine Magnetspule (6), einen hubbeweglichen Magnetanker (10) und einen Polkern (20) aufweist, wobei der Magnetanker (10) und der Polkern (20) zusammen einen Arbeitsluftspalt (28) begrenzen und der Magnetanker (10) zumindest mittelbar am Polkern (20) zur Anlage kommen kann, wobei das Ventil des Weiteren ein Ventilelement (14) aufweist, das zwischen einer Öffnungsstellung und einer Schließstellung beweglich ist und das mit dem Magnetanker (10) zumindest mittelbar in mechanischem Kontakt steht, wobei im Bereich der Anlage des Magnetankers (10) am Polkern (20) ein im Magnetanker (10) angeordneter separater Magnetankereinsatz (8) und/oder ein im Polkern (20) angeordneter separater Polkern-Einsatz (24) vorgesehen ist, über den/die der Magnetanker (10) am Polkern (20) zur Anlage kommt, wobei der Magnetanker-Einsatz (8) in eine dem Polkern (20) zugewandte erste Aussparung (42) des Magnetankers (10) eingeführt ist und/oder dass der Polkern-Einsatz (24) in eine dem Magnetanker (10) zugewandte dritte Aussparung (54) des Polkerns (20) eingeführt ist, und das Ventil wird **dadurch gekennzeichnet, dass** der Magnetanker-Einsatz (8) auf der dem Polkern (20) zugewandten Seite über einen ersten Bund (50) verfügt, der aus der dem Polkern (20) zugewandten Oberfläche des Magnetankers (10) in axialer Richtung herausragt und/oder der einen ersten vergrößerten Außendurchmesser im Vergleich zum Außendurchmesser des Magnetanker-Einsatzes (8) in dessen restlichen Bereich aufweist, wobei der Polkern-Einsatz (24) auf der dem Magnetanker (10) zugewandten Seite über einen zweiten Bund (62) verfügt, der aus der dem Magnetanker (10) zugewandten Oberfläche des Polkerns (20) in axialer Richtung herausragt und/oder der einen zweiten vergrößerten Außendurchmesser im Vergleich zum Außendurchmesser des Polkern-Einsatzes (24) in dessen restlichen Bereich aufweist.

2. Ventil nach Anspruch 1, **dadurch gekennzeichnet, dass** der Magnetanker-Einsatz (8) so ausgeführt ist, dass der Magnetanker-Einsatz (8) zum einen auf der dem Polkern (20) zugewandten Seite aus der ersten Aussparung (42) des Magentankers (10) herausragt und auf der dem Polkern (20) abgewandten Seite des Magnetankers (10) mit dem Ventilelement (14) in Kontakt steht.

3. Ventil nach Anspruch 2, **dadurch gekennzeichnet, dass** der Magnetanker-Einsatz (8) so ausgeführt ist, dass der Magnetanker-Einsatz (8) über die Oberfläche des Magnetankers (10) auf der dem Ventilelement (14) zugewandten Seite herausragt.

4. Ventil nach Anspruch 1, **dadurch gekennzeichnet, dass** sich der erste Bund (50) des Magnetanker-Einsatzes (8) auf einer ersten Schulter (44) des Magnetankers (10) - die sich umlaufend am Innendurchmesser des Magnetankers (10) ausbildet - in axialer Richtung abstützt.

5. Ventil nach Anspruch 1, **dadurch gekennzeichnet, dass** sich der zweite Bund (62) des Polkern-Einsatzes (24) auf einer dritten Schulter (56) des Polkerns (20) - die sich umlaufend am Innendurchmesser des Polkerns (20) ausbildet - in axialer Richtung abstützt.

6. Ventil nach den Ansprüchen 1 bis 5, **dadurch gekennzeichnet, dass** der Magnetanker-Einsatz (8) und/oder der Polkern-Einsatz (24) aus einem Material bestehen, das eine höhere Festigkeit als das Material des Magnetankers (10) und/oder des Polkerns (20) aufweist.

7. Ventil nach den Ansprüchen 1 bis 6, **dadurch gekennzeichnet, dass** das Material des Magnetanker-Einsatzes (8) und/oder das Material des Polkern-Einsatzes (24) nicht magnetisch ist.

8. Ventil nach einem der vorrangegangenen Ansprüche, **dadurch gekennzeichnet, dass** eine zweite Druckfeder (12) in eine zweite Aussparung (48) des Magnetanker-Einsatzes (8) und/oder in eine vierte Aussparung (60) des Polkern-Einsatzes (24) hineinragt, wobei diese zweite Druckfeder (12) zwischen dem Magnetanker (10) und dem Polkern (20) angeordnet ist und diese zweite Druckfeder (12) eine axiale und voneinander wegbewegende Kraft auf den Magnetanker (10) und den Polkern (20) ausübt.

9. Hochdruckpumpe (1) eines Kraftstoffeinspritzsystems mit dem Saugventil (2), **dadurch gekennzeichnet, dass** das Saugventil (2) gemäß mindestens einem der vorrangegangenen Ansprüche ausgebildet ist.

## Claims

1. Valve in a high-pressure pump (1) of a fuel injection system having a magnetic actuator (22), which has a magnet coil (6), a magnet armature (10) that can perform a stroke motion, and a pole core (20), wherein the magnet armature (10) and the pole core (20) together delimit a working air gap (28), and the magnet armature (10) can come into contact at least indirectly with the pole core (20), wherein the valve also has a valve element (14) which can be moved between an open position and a closed position, and which is at least indirectly in mechanical contact with the magnet armature (10), wherein a separate magnet armature insert (8) arranged in the magnet armature (10) and/or a separate pole core insert (24) arranged in the pole core (20) is/are provided in the region of contact of the magnet armature (10) with the pole core (20), via which insert/s the magnet armature (10) comes into contact with the pole core (20), wherein the magnet armature insert (8) is introduced into a first recess (42) in the magnet armature (10), said recess facing the pole core (20), and/or that the pole core insert (24) is introduced into a third recess (54) in the pole core (20), said recess facing the magnet armature (10), and the valve is **characterized in that** the magnet armature insert (8) has a first collar (50) on the side facing the pole core (20), said collar projecting in an axial direction from the surface of the magnet armature (10) which faces the pole core (20) and/or having a first enlarged outside diameter in comparison with the outside diameter of the magnet armature insert (8) in the remaining region thereof, wherein the pole core insert (24) has a second collar (62) on the side facing the magnet armature (10), said collar projecting in an axial direction from the surface of the pole core (20) which faces the magnet armature (10) and/or having a second enlarged outside diameter in comparison with the outside diameter of the pole core insert (24) in the remaining region thereof.

2. Valve according to Claim 1, **characterized in that** the magnet armature insert (8) is embodied in such a way that the magnet armature insert (8) on the one hand projects from the first recess (42) in the magnet armature (10) on the side facing the pole core (20), and is in contact with the valve element (14) on the side of the magnet armature (10) which faces away from the pole core (20).

3. Valve according to Claim 2, **characterized in that** the magnet armature insert (8) is embodied in such a way that the magnet armature insert (8) projects beyond the surface of the magnet armature (10) on the side facing the valve element (14).

4. Valve according to Claim 1, **characterized in that** the first collar (50) of the magnet armature insert (8) is supported in an axial direction on a first shoulder (44) of the magnet armature (10) - said shoulder being formed circumferentially on the inside diameter of the magnet armature (10).

5. Valve according to Claim 1, **characterized in that** the second collar (62) of the pole core insert (24) is supported in an axial direction on a third shoulder (56) of the pole core (20) - said shoulder being formed circumferentially on the inside diameter of the pole core (20).

6. Valve according to Claims 1 to 5, **characterized in that** the magnet armature insert (8) and/or the pole core insert (24) is/are composed of a material which has a higher strength than the material of the magnet armature (10) and/or of the pole core (20).

7. Valve according to Claims 1 to 6, **characterized in that** the material of the magnet armature insert (8) and/or the material of the pole core insert (24) is/are nonmagnetic.

8. Valve according to one of the preceding claims, **characterized in that** a second compression spring (12) projects into a second recess (48) in the magnet armature insert (8) and/or into a fourth recess (60) in the pole core insert (24), wherein this second compression spring (12) is arranged between the magnet armature (10) and the pole core (20) and this second compression spring (12) exerts an axial and mutually opposed force on the magnet armature (10) and the pole core (20).

9. High-pressure pump (1) of a fuel injection system having the suction valve (2), **characterized in that** the suction valve (2) is designed in accordance with at least one of the preceding claims.

## Revendications

1. Soupape dans une pompe haute pression (1) d'un système d'injection de carburant qui présente un actionneur magnétique (22) qui présente une bobine magnétique (6), une armature magnétique (10) à mouvement de va-et-vient et un noyau polaire (20), l'armature magnétique (10) et le noyau polaire (20) délimitant conjointement un entrefer de travail (28), et l'armature magnétique (10) pouvant venir en appui au moins indirectement contre le noyau polaire (20), la soupape présentant en outre un élément de soupape (14) qui est mobile entre une position d'ouverture et une position de fermeture et qui est au moins indirectement en contact mécanique avec l'armature magnétique (10), dans laquelle, au niveau de l'appui de l'armature magnétique (10) contre le noyau polaire (20), un insert d'armature magnétique séparé (8), disposé dans l'armature magnétique (10), et/ou un insert de noyau polaire séparé (24), disposé dans le noyau polaire (20), sont prévus et permettent à l'armature magnétique (10) de venir en appui contre le noyau polaire (20), l'insert d'armature magnétique (8) étant introduit dans un premier creux (42) de l'armature magnétique (10), tourné vers le noyau polaire (20), et/ou l'insert de noyau polaire (24) étant introduit dans un troisième creux (54) du noyau polaire (20), tourné vers l'armature magnétique (10), et la soupape est **caractérisée en ce que** l'insert d'armature magnétique (8) dispose d'une première collerette (50) sur le côté tourné vers le noyau polaire (20) qui fait saillie dans la direction axiale depuis la surface de l'armature magnétique (10), tournée vers le noyau polaire (20), et/ou qui présente un premier diamètre extérieur agrandi en comparaison avec le diamètre extérieur de l'insert d'armature magnétique (8) dans la zone restante de celui-ci, dans laquelle l'insert de noyau polaire (24) dispose sur le côté tourné vers l'armature magnétique (10) d'une deuxième collerette (62) qui fait saillie dans la direction axiale depuis la surface du noyau polaire (20), tournée vers l'armature magnétique (10), et/ou qui présente un deuxième diamètre extérieur agrandi en comparaison avec le diamètre extérieur de l'insert de noyau polaire (24) dans la zone restante de celui-ci.

2. Soupape selon la revendication 1, **caractérisée en ce que** l'insert d'armature magnétique (8) est réalisé de telle sorte que l'insert d'armature magnétique (8) d'une part fait saillie sur le côté tourné vers le noyau polaire (20) depuis le premier creux (42) de l'armature magnétique (10) et est en contact avec l'élément de soupape (14) sur le côté de l'armature magnétique (10), détourné du noyau polaire (20).

3. Soupape selon la revendication 2, **caractérisée en ce que** l'insert d'armature magnétique (8) est réalisé de telle sorte que l'insert d'armature magnétique (8) dépasse de la surface de l'armature magnétique (10) sur le côté détourné de l'élément de soupape (14).

4. Soupape selon la revendication 1, **caractérisée en ce que** la première collerette (50) de l'insert d'armature magnétique (8) prend appui dans la direction axiale sur un premier épaulement (44) de l'armature magnétique (10), qui est réalisé en périphérie sur le diamètre intérieur de l'armature magnétique (10).

5. Soupape selon la revendication 1, **caractérisée en ce que** la deuxième collerette (62) de l'insert de noyau polaire (24) prend appui dans la direction axiale sur un troisième épaulement (56) du noyau polaire (20), qui est réalisé en périphérie sur le diamètre intérieur du noyau polaire (20).

6. Soupape selon l'une quelconque des revendications 1 à 5, **caractérisée en ce que** l'insert d'armature magnétique (8) et/ou l'insert de noyau polaire (24) sont composés d'un matériau qui présente une résistance supérieure à celle du matériau de l'armature magnétique (10) et/ou du noyau polaire (20).

7. Soupape selon l'une quelconque des revendications 1 à 6, **caractérisée en ce que** le matériau de l'insert d'armature magnétique (8) et/ou le matériau de l'insert de noyau polaire (24) ne sont pas magnétiques.

8. Soupape selon l'une quelconque des revendications précédentes, **caractérisée en ce qu'**un deuxième ressort de pression (12) fait saillie dans un deuxième creux (48) de l'insert d'armature magnétique (8) et/ou dans un quatrième creux (60) de l'insert de noyau polaire (24), ce deuxième ressort de pression (12) étant disposé entre l'armature magnétique (10) et le noyau polaire (20), et ce deuxième ressort de pression (12) exerçant sur l'armature magnétique (10) et le noyau polaire (20) une force axiale et s'écartant l'un de l'autre.

9. Pompe haute pression (1) d'un système d'injection de carburant comprenant la soupape d'aspiration (2), **caractérisée en ce que** la soupape d'aspiration (2) est réalisée selon au moins l'une des revendications précédentes.
